(19) Europäisches Patentamt

European Patent Office

Office européen des brevets

(11) **EP 3 871 911 B1**

(12) **EUROPEAN PATENT SPECIFICATION**

(45) Date of publication and mention of the grant of the patent:
**28.01.2026   Bulletin 2026/05**

(21) Application number: **20159213.6**

(22) Date of filing: **25.02.2020**

(51) International Patent Classification (IPC):
**B60K 1/00** *(2006.01)*    **G01C 21/26** *(2006.01)*
**B60W 60/00** *(2020.01)*    **G06N 3/04** *(2023.01)*
**G06N 3/08** *(2023.01)*    **G06N 5/00** *(2023.01)*
**G06N 3/044** *(2023.01)*

(52) Cooperative Patent Classification (CPC):
**G06N 3/08; G01C 21/26; G06N 3/044; G06N 3/0442; G06N 3/09; G06N 3/0985;** G06N 5/01; G06N 20/10; G06N 20/20

(54) **SYSTEM AND METHOD FOR A DRIVER ASSISTANCE FUNCTION OF A VEHICLE**

SYSTEM UND VERFAHREN FÜR EINE FAHRERASSISTENZFUNKTION EINES FAHRZEUGS

SYSTÈME ET PROCÉDÉ POUR UNE FONCTION D'ASSISTANCE AU CONDUCTEUR D'UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.09.2021   Bulletin 2021/35**

(73) Proprietor: **Bayerische Motoren Werke Aktiengesellschaft**
**80809 München (DE)**

(72) Inventors:
• **Alberts, Esther**
  **80796 München (DE)**

• **Holder, Stefan**
  **80686 München (DE)**
• **Sidorov, Maxim**
  **80807 München (DE)**

(56) References cited:
**WO-A1-2014/068094**

• **GROSS FLORIAN ET AL: "Route and Stopping Intent Prediction at Intersections From Car Fleet Data", IEEE TRANSACTIONS ON INTELLIGENT VEHICLES, IEEE, vol. 1, no. 2, 1 June 2016 (2016-06-01), pages 177 - 186, XP011635947, ISSN: 2379-8858, [retrieved on 20161205], DOI: 10.1109/TIV.2016.2617625**

**Description**

The invention relates to a system and method for determining a most probable path of a vehicle for a driver assistance function of the vehicle.

Several driver assistance functions in a vehicle require information from the road ahead of the vehicle. In some cases, the road ahead of the vehicle, i.e. a path the vehicle will be following in the next few kilometres depending on a predetermined length of the path or a predetermined time interval the vehicle is moving in, is known to some extent, for example when a navigation system is switched on and operates. In many cases, it is not known and it needs to be predicted. The path the vehicle is predicted to follow in the next few kilometres is called "the most probable path, also abbreviated as M PP. The Most Probable Path a vehicle is going to follow in the near future can be approximately 10 km, e.g. 5, 8, 9, 10, 11, 12, or 15 km. For example, when operating a navigation system during driving without having entered a destination, the navigation system may require the information from the road ahead of the vehicle of the M PP to be displayed on a screen of the navigation system to the driver. Also, if an Electronic Control Unit, also called ECU, of the vehicle notices that a capacity of a battery and/or a fuel tank is running low to limit a remaining range of the vehicle, the M PP can be utilized to find a nearest gas station without forcing the driver to find and then enter a destination of a gas station into the navigation system which during driving may be dangerous due to temporal loss of attention to traffic.

Known implementations of determining the MPP rely on two heuristics: a functional road class, also called FRC, which is a class distinguishing between e.g. a path, road, roadway, federal road and a thruway, as well as a direction change angle, which is an angle between two intersecting roadways/roads. In WO 2014/068094 A1, a method of generating a horizon for use by an advanced driver assistance system of a vehicle involves using digital location-based data, driver data and/or vehicle data to determine the likelihood that different outgoing paths are taken at a decision point along a currently traversed road segment, and deriving a probability that each path may be taken. The probability may be based on one or more of: an angle of the path relative to the incoming path, the road class of the path, a speed profile of the path, historical paths taken by vehicles at the decision point, and historical paths taken at the decision point by the individual driver or vehicle. This implementation suffers from oversimplification, resulting in an inaccurate prediction of the most probable path. In GROSS FLORIAN ET AL: "Route and Stopping Intent Prediction at Intersections From Car Fleet Data", IEEE TRANSACTIONS ON INTELLIGENT VEHICLES, IEEE, vol. 1, no. 2, 1 June 2016 (2016-06-01), pages 177-186, a route and stopping intent prediction is extracted at intersections from car fleet data by using a Random Decision Forest. To enable the machine learning methods to generalize to multiple intersections in the future, the features are selected to be independent of the direction or location of the intersection.

It is therefore an object of the present invention to provide a computer implemented method for determining a most probable path of a vehicle for a driver assistance function of the vehicle such that a determination/prediction of the most probable path avoids the disadvantages of the prior art and is improved in that the most probable path is determined more accurately. It is also an object to provide the method in an effective, simple to implement and cost-effective manner. It is a further object to provide the method in an automated manner without any assistance of a user.

The object is solved by the method of claim 1, the computer program product of claim 11, and the system of claim 12. Further developments and advantageous embodiments are defined in the dependent claims.

The computer implemented method for determining a most probable path of a vehicle for a driver assistance function of the vehicle, which driver assistance function requires information of a road ahead of the vehicle comprises the steps:

- receiving map attribute data from of a map unit comprising information of at least one map having at least one map attribute, and fleet sensor data, wherein a fleet represents a number of fleet vehicles, wherein each fleet vehicle comprises at least one sensor for acquiring position data and/or motion data which for each fleet vehicle are/is transferred to and stored in a fleet sensor data unit,
- training a machine learning algorithm by inputting training data comprising at least part of both the map attribute data and the fleet sensor data, wherein the training data is related to an intersection category, the intersection category depending on a predetermined number of road segments joining at an intersection, such as 3-way, 4-way or 5-way intersections,
- providing to the machine learning algorithm input data comprising at least one data attribute of a road segment joining at the intersection of the intersection category from which road segment the vehicle is approaching the intersection,
- generating in response to receiving the input data output data of the machine learning algorithm comprising a probability for a turn at the intersection of the vehicle for each road segment joining at the intersection, e.g. by selecting the road element with the highest probability or at equal highest probabilities the road element closest or most remote to the incoming road segment, and
- determining, based on the probability for a turn at the intersection of the vehicle for each road segment joining at the intersection, a most probable turn at the intersection of the vehicle, and, based on the most probable turn of the intersection of the vehicle, the most probable path of the vehicle,

wherein for each of several intersection categories differing in the predetermined number of road segments joining at the intersection another machine learning algorithm is trained, such that for a given number of road segments joining at the intersection there is a defined machine learning algorithm available, and for each intersection of a given category within a predetermined length of the most probable path or a predetermined time interval the vehicle is moving in, based on the machine learning algorithm trained for the given intersection category, the most probable turn at the intersection of the vehicle is determined.

The vehicle can be an electric vehicle, hybrid vehicle, a vehicle comprising a combustion engine or a hydrogen engine or any other propulsion technology such as a jet engine. The vehicle can be in the form of e.g. a car, truck, bike, motorcycle, boat, ship, airplane or other movable vessel. The intersection can be in the form of e.g. a 3-way, 4-way, or 5-way intersection wherein the number 3, 4, or 5 defines the number of road segments joining the intersection. A turn at the intersection of the vehicle means any way of passing or crossing the intersection, i.e. also straight or essentially straight crossings of the vehicle are turns in this sense.

The machine learning algorithm may be in the form of a Random Forest, an artificial Neural Network, a Support Vector Machine, a k-Nearest-Neighbors-algorithm, and an Ensemble Classifier. A time series machine learning algorithm in form of an artificial recurrent Neural Network, which tracks an internal state to represent memory, is also possible.

Using the machine learning algorithm, the most probable path is improved based on fleet sensor data, also called fleet data, collected e.g. in the backend such as a backend server. More specifically, the machine learning algorithm is trained in order to generate an accurate MPP determination/prediction algorithm wherein the output data depends upon a given set of data attributes as input data. The Most Probable Path the vehicle is going to follow in the near future, e.g. approximately 10 km, is thus determined/predicted based on the machine learning algorithm leveraging data from map attribute data and from fleet sensor data. The inventive method does not require any long-term tracking of personalized information. Hence, the method can generate path determinations/predictions, even if the user/driver of the vehicle/-customer does not consent to personalized data collection. Based on one or more data attributes of map attribute data and the fleet sensor data provided as input data to the machine learning algorithm an intersection turn is estimated. The machine learning algorithm then outputs a probability according to each possible turn. Using fleet sensor data as input data in a machine learning algorithm, the most probable path is determined more accurately than in prior art implementations relying an map attribute data, wherein the method is provided by using existing fleet sensor data and thus in an effective, simple to implement and cost effective manner.

A high-performance machine learning algorithm with an optimized set of parameters, e.g. a number of layers and a number of neurons for an artificial neural network, may be found using cross validation. Since a large set of parameters is evaluated, trying all combinations of parameters does not seem feasible. Instead, an advanced algorithm for hyperparameter optimization such as Bayesian Optimization is used according to an embodiment of the inventive method.

For training the machine learning algorithm, it is advantageous to decide how to deal with newer data versus older data. A simple embodiment of the invention is to consider data that is, for instance, at most one month old. For an intersection for which only few data is available it additionally makes sense to increase the time interval such that a minimum number of data points, e.g. 10.000 data points per intersection, is available. Another embodiment of the invention is to weight older data less than newer data when training the machine learning algorithm. This may be realized using an exponential decay, which means that the weight of a data point gets halved after a fixed time period, e.g. one month.

According to the invention, for each of several intersection categories differing in the predetermined number of road segments joining at the intersection another machine learning algorithm is trained, and for each intersection of a given category within a predetermined length of the most probable path or a predetermined time interval the vehicle is moving in, based on the machine learning algorithm trained for the given intersection category, the most probable turn at the intersection of the vehicle is determined. As machine learning algorithms take a fixed number of input variables, whereas intersections can consist of a different number of road segments, different machine learning algorithms for intersections with a different intersection topology are trained and used to determine the most probable path. For example, one machine learning algorithm is trained and used for 3-way intersections, another one for 4-way intersections, another one for 5-way intersections and so on.

Based on the most probable turn of the intersection of the vehicle at each intersection of several intersections within the predetermined length of the most probable path, it is preferred that the most probable path of the vehicle is determined by consecutively following each road segment on which the vehicle is most probable to turn. This way, any kind of path can be modelled by using machine learning algorithms for any kind of intersection on the path.

When vehicle- and/or driver-specific data are excluded from the training data and/or the input data, a privacy of the driver's data is thus advantageously present while due to usage of fleet sensor data the most probable path is still accurately determined. In this embodiment of the invention, the method is provided in an automated manner without any assistance of the driver of the vehicle.

With advantage, the training data and/or the input data includes at least one of the following data attributes and/or any combination of at least two of the following data attributes:

- road-specific data attributes:

  - curvature,
  - slope,
  - Functional Road Class,
  - direction change angle, which is an angle between two intersecting road segments
  - street type,
  - speed limit,
  - number of lanes,
  - width of street,
  - category of traffic sign,
  - point of interest,
  - total number of traversals within a month,
  - total number of traversals for each hour in a week,

- intersection-specific data attributes:

  - total number of road segments
  - direction angle with the road segment on which the vehicle is approaching the intersection and each of the other road segments of the intersection
  - direction angle with the road segment on which the vehicle is approaching the intersection and the road segments on which the vehicle is turning
  - location of the intersection, e.g. GPS coordinates
  - city and/or province and/or country,
  - Geohash,
  - specification of the road segment on which the vehicle is driving,
  - urban or countryside,
  - total number of vehicles that drive from one direction into the other in a predefined time interval
  - total number of traversals within a month,
  - total number of traversals for each hour in a week,

- environmental data attributes:

  - time,
  - day of a week,
  - month,
  - temperature,
  - weather condition such as rain intensity, sun intensity, snow intensity, fog intensity, position of the sun, wind condition
  - traffic intensity.

Any set of data attributes resulting from an aggregation or segmentations of the above list or a subset therefrom represents a further embodiment of the invention. As training and/or input data, data attributes taken from or based on map attribute data and fleet sensor data are used. This way, it is not required to use any vehicle- or driver-specific data. Furthermore, data attributes as input data for training or using the machine learning algorithm after training can be provided for each road that is part of the intersection considered. The data attributes can be specific to the intersection itself or they can be environmental.

According to the invention, the determination of the most probable path is improved by inputting fleet sensor data in the machine learning algorithm, the fleet sensor data being collected e.g. in the backend. More specifically, at least one machine learning algorithm is trained in order to generate an accurate most probable prediction algorithm.

Attributes extracted from fleet sensor data can include:

- intersection crossings: total number of vehicles that drive from one direction into the other in a predefined time interval,
- time information: timestamp, month of the year, day of the week, time of the day,
- weather: temperature and precipitation.

Attributes extracted from map attributes can include:

- direction change angles,
- functional road classes,
- speed limit information,
- location of the intersection.

Given e.g. this set of data attributes, the machine learning algorithm decides which turn the vehicle is most likely to take.

A number N of data attributes for each intersection category is determined in a preferred embodiment of the invention by three data road segment dependent attributes for each road segment and one road segment independent data attribute according to the following formula:

$$N = n \times 3 + 1,$$

where n is a number of road segments joining at the intersection.

Using the machine learning algorithm, in one embodiment of the invention distinct models for each possible intersection topology are trained in a training phase. Subsequently, during a testing phase the corresponding model is selected depending on the intersection being tested. Different models can be specified by different numbers of data attributes in their set of input data.

For example, the following set of data attributes may describe the road segment joining at the intersection: as map attribute data its functional road class and the direction angle with the incoming road segment, and as fleet sensor data the number of traversals calculated from the fleet sensor data. A general data attribute is added describing the complete intersection, namely a weather indicator. Given this set of data attributes, the number of features N for each intersection type can easily be calculated according to the above mentioned formula.

Hence, an artificial neural network trained on intersections joining three road segments will have 10 neurons in its input layer. Analogically, the neural network for 5-segments intersection will have 16 neurons in the input layer.

It is preferred that during the step of training and/or an additional step of testing of the machine learning algorithm the road segment dependent data attributes are inputted and/or outputted in a sequence clockwise or counter-clockwise when the intersection is viewed from above the intersection starting from the road segment on which the vehicle is approaching the intersection.

In this embodiment of the invention, for the machine learning algorithms an order of the inputted data attributes and the data outputted is consistent from one prediction to another, both during training and testing. For each determination of the most probable path, the road segment from which the vehicle is approaching the intersection is known. This knowledge is used to sort the road-specific data attributes in the input data. That is, the road-specific input data attributes are sorted in clockwise or counter-clockwise direction starting from the incoming road. The machine learning algorithm is trained to output the probabilities for each possible turn ordered either clockwise or counter-clockwise starting from the incoming road segment. For a given most probable path, the order is kept for all intersections of the path.

The machine learning algorithm for a given intersection category can be trained on fleet sensor data according to the following steps in the following order:

- a subset of the fleet sensor data is treated as a set of training data
- this set of training data will contain samples, calculated for each intersection in each trace, consisting of a set of data attributes as input data and output data,
- the machine learning algorithm is trained on this set of training data, and
- the machine learning algorithm is tested optionally on a separate unseen set of testing data, and
- the machine learning algorithm which is either tested or tested and trained is ready to be deployed.

More specifically, given the fleet sensor data collected within e.g. two months, the fleet sensor data from the first month may be used to train the machine learning algorithm while the second month's fleet sensor data will serve to test the resulting machine learning algorithm.

The input data provided to the machine learning algorithm comprises advantageously not only the at least one data attribute of the road segment joining at the intersection of the intersection category from which road segment the vehicle is approaching the intersection, but additionally at least one further data attribute of a road segment joining at a previous intersection on which road segment the vehicle has turned before approaching the intersection.

In this embodiment, the machine learning algorithm for a respective intersection category uses not only data attributes of the current intersection, but also data attributes of at least one previous intersection such that the algorithm can leverage historical information to generate a more accurate, i.e. better determination/prediction of the most probable path. These additional data attributes may include the following attributes for the last n intersections the vehicle has passed:

- the FRCs of the road segments between the last n intersections,
- the length of the road segments between the last n intersections,
- direction change angles between incoming and outgoing street segments that the vehicle took for the last n intersections,
- location of the last n intersections.

These data attributes are all computable from the fleet sensor data available e.g. in the backend. For including the data attributes reflecting the temporal information as described above, the fleet sensor data should contain traces covering several (n) intersections. Instead of just inputting data of the current intersection to the machine learning algorithm, temporal information is thus added from previous intersection turns on the same path.

In a further advantageous embodiment of the invention, a time series machine learning algorithm is used as the machine learning algorithm to determine the most probable path of the vehicle wherein the input data is provided to the time series machine learning algorithm in a sequential manner.

For leveraging temporal information to make temporally consistent determinations/predictions of the most probable path, a time series determination/prediction is used according to this embodiment in which the determination/-prediction which turn to take makes use of the information of the past driven path and the turns the vehicle has made within the last n intersections. The problem of predicting which road segment, also called link, will be followed on the road ahead is thus modelled as a time series determination/prediction. Doing so, the machine learning algorithm can be individualized for a specific driver or vehicle. To this end, the path which the vehicle has followed in the past is used to predict which path it will follow in the future. This embodiment differs from adding temporal information from previous intersection turns on the same path to a machine learning algorithm because it adopts a time series algorithm which by itself allows to learn from sequential data. This also means that one must not hard-code a parameter n for the number of intersections the vehicle has passed on a given path as this information will be processed automatically by the time series machine learning algorithm.

As data attributes for the time series machine learning algorithm, e.g. the following data attributes specific to the current intersection may be used:

- intersection crossings: number of vehicles that crossed the intersection during the last month,
- time information: timestamp, month of the year, day of the week, time of the day,
- weather: temperature and precipitation,
- Link ID of a current road segment approaching the intersection,
- FRC of current road segment approaching the intersection,
- speed limit information of current road segment approaching the intersection.

An artificial recurrent Neural Network is used preferably as the time series machine learning algorithm which is trained by using a Long-Short-Tem-Memory such that probabilities for a turn at the intersection of the vehicle between pairs of road segments joining at the intersection are generated, wherein each pair consists of the road segment on which the vehicle is approaching the intersection and each other road segment joining the intersection.

When using time series machine learning algorithms which are especially suitable to make predictions based on historical data, one algorithm is particularly useful for this task which is an artificial recurrent neural network which is able to track an internal state to represent memory, such as Long-Short-Tem-Memory, abbreviated as LSTM. An LSTM takes input data attributes of a fixed dimension at time step t, then uses the output prediction, i.e. most probable turn at the intersection of the vehicle, of time step t-1 as well as its internal cell state of time step t-1, to generate an output prediction for time step t and adapts its internal cell state at time step t for the next prediction step. Instead of trying to train different LSTMs for different intersection categories, according to this embodiment of the invention probabilities between pairs of road segments are generated, wherein each pair consists of the road segment approaching the intersection and one of the other road segments at the intersection. This way, LSTMs can be used while having different intersection categories within the same path.

When a most probable turn of the intersection of the vehicle at each intersection of several intersections is to be determined, a Beam Search algorithm is used advantageously to determine the most probable path of the vehicle, wherein the Beam Search algorithm exclusively considers most likely paths during expansion of the most probable path.

There are cases where the goal is not only to determine/predict the road segment of the current intersection but to determine/predict road segments of multiple future intersections in order to obtain a longer predicted path. This can be accomplished in that at each intersection the road segment with highest probability is chosen. For only a few future intersections/steps the optimal solution can then be computed by computing the total probability of all possible paths and electing the path with highest probability. However, for a large number of future intersections this procedure is not feasible because of exponentially increasing runtime. In this case, according to the embodiment of the invention mentioned above the Beam Search algorithm is used to determine/predict multiple future intersections to save runtime and computational resources.

Another aspect of the invention is a software program realizing the methods according to the invention when executed on a computer. In the aforementioned software program the computer is preferably a distributed computing system wherein part of the computing system is located/arranged/operated in a cloud computing system. The software program may be embodied as a computer program product or a data carrier carrying data representing the software program.

The invention also relates to a system for determining a most probable path of a vehicle for a driver assistance function of the vehicle, which driver assistance function requires information of a road ahead of the vehicle. The system comprises:

- reception means for receiving map attribute data from of a map unit comprising information of at least one map having at least one map attribute, and fleet sensor data, wherein a fleet represents a number of fleet vehicles, wherein each fleet vehicle comprises at least one sensor for acquiring position data and/or motion data which for each fleet vehicle are/is transferred to and stored in a fleet sensor data unit,
- training means for training a machine learning algorithm by inputting training data comprising at least part of both the map attribute data and the fleet sensor data, wherein the training data is related to an intersection category, the intersection category depending on a predetermined number of road segments joining at an intersection, such as 3-way, 4-way or 5-way intersections, wherein for each of several intersection categories differing in the predetermined number of road segments joining at the intersection another machine learning algorithm is trained, such that for a given number of road segments joining at the intersection there is a defined machine learning algorithm available, and for each intersection of a given category within a predetermined length of the most probable path, based on the machine learning algorithm trained for the given intersection category, the most probable turn at the intersection of the vehicle is determined,
- provision means for providing to the machine learning algorithm input data comprising at least one data attribute of a road segment joining at the intersection of the intersection category from which road segment the vehicle is approaching the intersection,
- generation means for generating in response to receiving the input data output data of the machine learning algorithm comprising a probability for a turn at the intersection of the vehicle for each road segment joining at the intersection, and
- determination means for determining, based on the probability for a turn at the intersection of the vehicle for each road segment joining at the intersection, a most probable turn at the intersection of the vehicle, and, based on the most probable turn of the intersection of the vehicle, the most probable path of the vehicle.

The inventive system shows the same advantages and effects as those mentioned in connection with the inventive method. The reception means, training means, provision means, generation means, and determination means or at least a part thereof may advantageously be combined in a server, e.g. a backend-server. A part of the reception means, training means, provision means, generation means, and determination means not combined in the server may by arranged in the vehicle, e.g. in the ECU thereof.

As stated above with regard to the inventive method, the machine learning algorithm may be one of a Random Forest, an artificial Neural Network, a Support Vector Machine, a k-Nearest-Neighbors-algorithm, and an Ensemble Classifier. When being embodied as a time series machine learning algorithm, the machine learning algorithm may be in the form of an artificial recurrent Neural Network, which tracks an internal state to represent memory, such as Long-Short-Term-Memory.

Other aspects, features and advantages of the invention will become apparent by the below description of exemplary embodiments alone or in cooperation with the appended figures.

Fig. 1      is a schematic diagram of vehicle moving on an ascending road segment and fleet vehicles which are the same or similar kind as that of the vehicle,

Fig. 2      is a schematic workflow diagram including functional units of a system for determining a most probable path of a vehicle for a driver assistance function of the vehicle,

Fig. 3      is a schematic diagram of a 4-way intersection comprising four road segments joining the intersection,

Fig. 4      is a schematic workflow diagram of units of training material inputted along determination of a most probable path to a machine learning algorithm for training by providing training data comprising map attribute data and fleet sensor data,

Fig. 5      is a schematic diagram of the most probable path of the vehicle ending at an intersection such that output data of the machine learning algorithm comprising a probability for a turn at the intersection of the vehicle for each road segment joining at the intersection is generated,

Fig. 6a, b     a schematic diagram of road segments joining two intersections and the most probable path on part of the road segments (a), and a schematic flow (b) of input data in and output data out of several Long-Short-Term-Memory-cells, wherein probabilities for a turn at the intersection of the vehicle between pairs of road segments joining at the intersection are generated,

Fig. 7     and a schematic workflow diagram including functional units of the Long-Short-Term-Memory-cells of a time series of an artificial recurrent Neural Network.

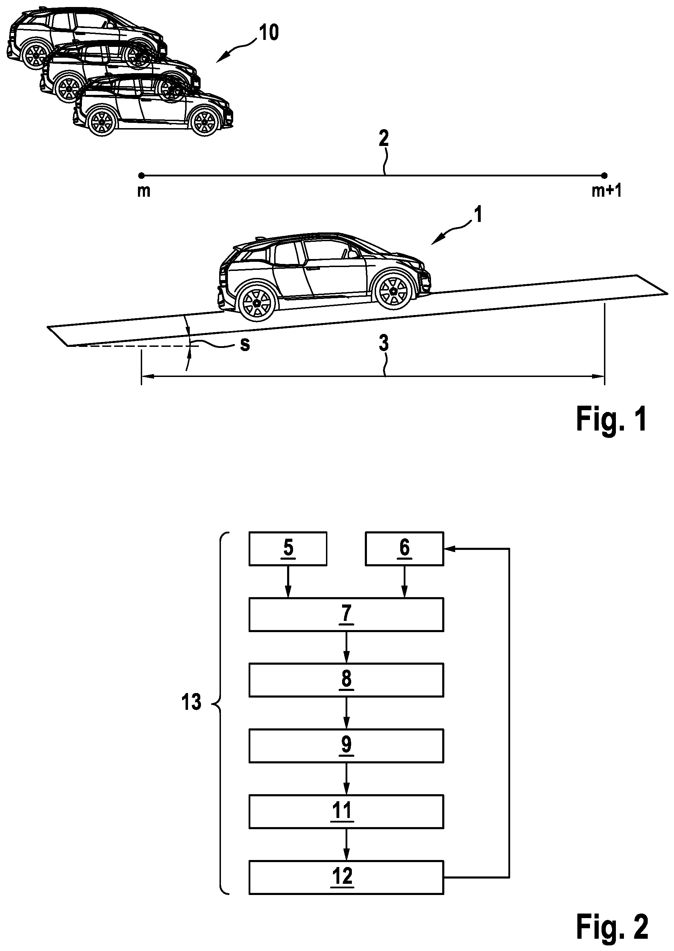

Fig. 1 is a schematic diagram of a vehicle 1 moving on the road segment 2 and fleet vehicles 10 which are of the same/equal or similar type/kind/category as that of the vehicle 1. The road segment 2 with a length 3 is not the first road segment the vehicle has passed but there are a number m of previous road segments vehicle 1 already passed. Following the road segment 2, there might be a road segment of number m+1 on which vehicle 1 continues to move. Road segment 2 may have a slope with a positive slope angle s leading to an ascending road segment for vehicle 1 to pass. Vehicle 1 may be any of a combustion engine vehicle, an electric vehicle, and a hybrid vehicle. Other propulsion technologies for the vehicle are possible. The form of the vehicle may be a car as depicted in Fig. 1, wherein other forms such as a truck, bike, bicycle, ship or plane are possible as well.

Position and/or motion data with regard to the road segment 2 may be provided/collected from a current or previous trip of vehicle 1 or another vehicle. For example, the position and/or motion data may be provided by the fleet vehicles 10. The fleet vehicles 10 may be vehicles of the same or similar type as vehicle 1. In particular, the fleet of the fleet vehicles 10 may include a large number of vehicles 10 of the same and/or similar type as vehicle 1. In particular, the fleet may include a large number of third-party vehicles 10 and optionally the vehicle 1. The position and/or motion data of the fleet vehicles 10 are sometimes called "Ground Truth" which means that a (real) value of a fleet sensor in any of the fleet vehicles 10 is measured and gathered to form fleet sensor data of one, several or all of the fleet vehicles 10. For example, the actual time for crossing the road segment 2, also called "link", which has been measured by or in one of the vehicles of the fleet vehicles 10 or a number of crossings of the road segment 2 within a predetermined time interval may represent the Ground Truth.

Fig. 2 is a schematic workflow diagram including functional units 7 to 12 of a system for determining a most probable path of a vehicle such as the vehicle 1 for a driver assistance function of the vehicle 1 according to the invention. The most probable path, also called MPP, is the path the vehicle 1 is predicted to follow in the next few kilometers, e.g. 1 km, 5 km, 10 km, 15 km, 20 km or any distance in between these values. The length of the most probable past may also be defined by a current speed of the vehicle 1 and a predetermined time interval resulting in a predetermined length of the most probable path to be determined. There are map attribute data 5 from a map unit comprising information of at least one map having at least one map attribute and fleet sensor data 6 provided to reception means 7 for receiving the map attribute data 5 and the fleet sensor data 6. A fleet represents a number of fleet vehicles 10, wherein each fleet vehicle 10 comprises at least one sensor for acquiring position data and/or motion data which for each fleet vehicle 10 are/is transferred to and stored in a fleet sensor data unit which may be in the form of a server, e.g. a backend-server.

Training data comprising at least part of both the map attribute data 5 and the fleet sensor data 6 are inputted in training means 8 for training a machine learning algorithm, wherein the training data is related to an intersection category depending on a predetermined number of road segments 2 joining at an intersection. Input data comprising at least one data attribute of the road segment 2 joining at the intersection of the intersection category for which road segment 2 the vehicle 1 is approaching the intersection is provided by provision means 9 to the machine learning algorithm. In response to receiving the input data, there are generation means 11 for generating output data of the machine learning algorithm comprising a probability for a turn at the intersection of the vehicle 1 for each road segment 2 joining at the intersection.

Afterwards, determination means 12 are provided for determining, based on the probability for a turn at the intersection of the vehicle 1 for each road segment 2 joining at the intersection, a most probable turn at the intersection of the vehicle 1, and based on the most probable turn of the intersection of the vehicle 1, the most probable path of the vehicle is determined by determination means 12, e.g. by selecting the road element 2 with the highest probability. The most probable path of the vehicle 1 may be provided to the fleet sensor data unit storing the fleet sensor data to enhance the fleet sensor data for use of the vehicle 1 or another vehicle. The map attribute data 5, the fleet sensor data 6, the reception means 7, training means 8, provision means 9, generation means 11, and the determination means 12 or a part thereof may be comprised by backend-server 13. A part of these entities which is not comprised by the backend-server 13 may be comprised by an electronic control unit of the vehicle.

For each of several intersection categories differing in the predetermined number of road segments joining at the intersection several machine learning algorithms are trained such that for a given number of road segments joining at the intersection there is a defined machine learning algorithm available for determining the most probable turn at the intersection of the vehicle 1. Therefore, different machine learning algorithms depending on the number of road segments joining at the intersection are trained.

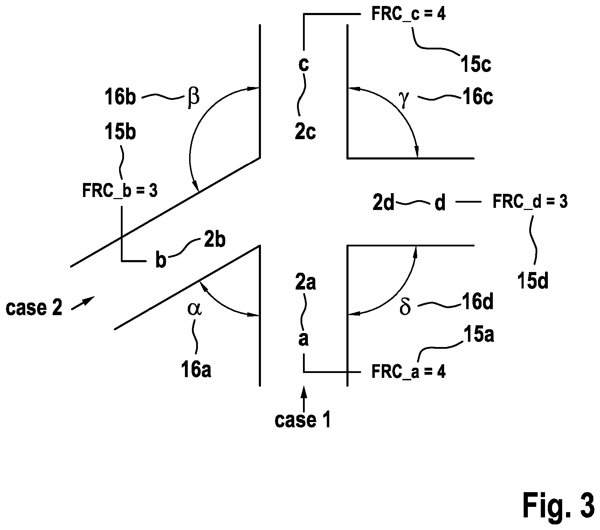

Regarding Fig. 3, a machine learning algorithm trained on intersections joining four road segments is discussed. Fig. 3 is a schematic diagram of a 4-way intersection 5a comprising for road segments 2a to 2d joining the intersection 5a, wherein the vehicle 1 approaches the intersection 5a (see case 1) from the bottom upwards on road segment 2a and (see case 2) from the left laterally on road segment 2b. The training data is represented by a set of data attributes in form of a feature vector x, which is generated for the vehicle 1 approaching the intersection 5a on segment 2a at a point in time t. The feature vector x consists of the data attributes generated for road segment 2a, 2b, 2c, 2d and of an additional data attribute which is specific for the intersection 5a:

$$x = (x_a, x_b, x_c, x_d, x_{intersection}). \tag{1}$$

The machine learning algorithm f, specifically trained for 4-ray intersections such as intersection 5a, determines/predicts which road segment 2a, 2b, 2c, 2d the vehicle 1 will most likely turn on/take. The output data of the algorithm comprises probabilities that road segment 2a, 2b, 2c or 2d will be the segment which the vehicle 1 will turn on/take at the intersection 5a. The output y of the machine learning algorithm f in which the feature vector x is inputted can be written in the form

$$y = f(x) \tag{2}$$

where

$$y = \left(p(a_t|a_{t-1}), p(b_t|a_{t-1}), p(c_t|a_{t-1}), p(d_t|a_{t-1})\right) \tag{3},$$

where t denotes a point in time at an intersection and t-1 a point in time at a previous intersection before reaching the intersection at point in time t.

In Fig. 3, for the simple embodiment where a set of data attributes for a road segment only consists of its functional road class, FRC, and its direction change angle, we find in the embodiment where the vehicle 1 is approaching the intersection 5a on road segment 2a (case 1) that the road-specific inputted data attributes 15a to 15d, 16a to 16d are given for road segments 2a, 2b, 2c and then 2d. The outputted probabilities p are given for road segment 2a, 2b, 2c, and 2d respectively.

In the embodiment, in which the vehicle 1 is approaching the intersection 5a on road segment 2b (case 2), the road-specific data attributes 15a to 15d, 16a to 16d are given for road segment 2b, 2c, 2d and then 2a. The outputted probabilities p are given for road segment 2b, 2c, 2d, and 2a, respectively. The data attributes 15a to 15d represent functional road classes in form of different integers 3, 4 for different road classes such as a highway or an urban street. The data attributes 16a to 16d denote angles $\alpha$, $\beta$, $\delta$, $\gamma$ between adjacent road segments 2a, 2b; 2b, 2c; 2c, 2d; 2d, 2a.

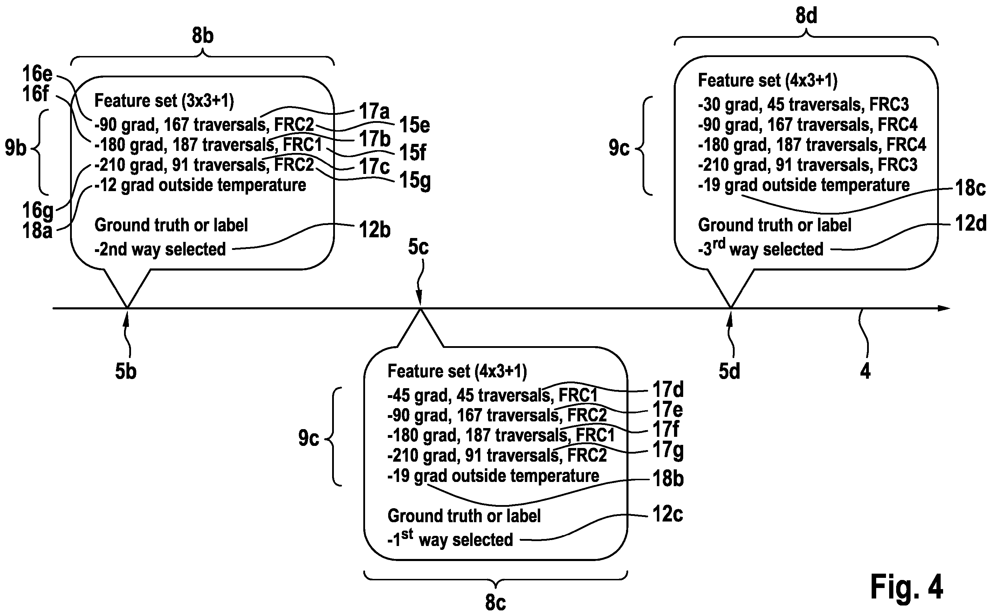

Fig. 4 is a schematic workflow diagram of units of training material in the form of training data 8b, 8c, 8d inputted in a machine learning algorithm sequentially along the most probable path 4 for training of the machine learning algorithm. The training data 8b to 8c comprises map attribute data in the form of data attributes 15e, 15f, 15g for the functional road class and data attributes 16e, 16f, 16g for the direction change angle and fleet sensor data 17a, 17b, 17c for the number of traversals of the intersection 5d. The intersection 5b is a 3-way intersection whereas intersections 5c, 5d are 4-way intersections, respectively. The training data 8b along with the road-specific data attributes 15e to 15g, 16e to 16g, 17a to 17c further comprises as input data 9b a road segment independent data attribute in form of an outside temperature 18a at the intersection 5b. From Ground Truth data or a label, also called target label, the training data comprises further the information that vehicle 1 has selected the second way of the 3-way intersection 5b as the further data attribute 12b which after training of the machine learning algorithm should be the output of the machine learning algorithm at the intersection 5b. After passing the intersection 5b the vehicle 1 will approach intersection 5c which is a 4-way intersection, wherein as training input data 9c the direction change angles between two adjacent road segments of this intersection, the number of traversals for each road segment 17d, 17e, 17f, 17g and as a road segment independent data attribute the outside temperature 18b at the intersection 5c will be inputted. From Ground Truth data or labeling the further data attribute is added as training data 8c that the first way is selected by vehicle 1 of the 4-way intersection 5c. After having passed intersection 5c, the vehicle 1 approaches intersection 5d wherein as training input data 9c the direction change angles between adjacent road segments for the 4 road segments of the 4-way intersection 5d will be provided along with an outside temperature of 19° as a road segment independent data attribute 18c. From Ground Truth data or labeling the training data 8d further comprises the information in form of the further data attribute 12d that the vehicle 1 takes the third way of the 4-way intersection 5d. The training data 8b for intersection 5b thus comprises training input data 9b and training output data in the form of the data attribute 12b. For the intersection 5c, the training data 8c comprises training input data 9c and training output data in form of the data attribute 12c, and for intersection 5d the training data 8d comprises training input data 9c along with training output data in form of the data attribute 12d to train the machine learning algorithm for the sequence of passing intersections 5b, 5c, and 5d by vehicle 1. The training data 8b, 8c, 8d contains samples calculated for each intersection 5b, 5c, 5d in each trace, consisting of a set of training input data 9b, 9c, 9d and training output data 12b, 12c, 12d.

In a further example of the invention, fleet sensor data may be collected e. g. within two months, wherein the data from the first month will be used to train the machine learning algorithm, while the second month data will serve to test the resulting machine learning algorithm. Further, all the traces from both sets of data will be split into chunks around intersections 5b, 5c, 5d and grouped based on the intersection category of 3-way intersection 5b and 4-way intersections 5c, 5d. All the trace's chunks driven along the 3-way intersection 5b will be grouped together for training and testing purposes. Next, for each chunk, the corresponding set of input data 9b, 9c, 9d is constructed, wherein a number of data attributes for each intersection 5b, 5c, 5d is determined by three data attributes for each road segment 15e to 15g, 16e to 16g, 17a to 17g and one road segment independent data attribute 18a to 18c according to the formula N=nx3+1, where n is number of road segments 2a to 2d joining at the intersection 5a to 5d. Given the continuous trace of data, not only the input data but also the target label, i.e. the chosen road segment of the intersection 5b, 5c, 5d is identified in form of data attributes 12b, 12c, 12d. A single trace can have several intersection chunks with the corresponding set of input data and its label as output data, thus taken into account the input data described at the previous intersection as shown in Fig. 4. The intersection chunks in form of the training data 8b, 8c, 8d along with their training input data 9b, 9c, 9d and target labels as outputted data attributes 12b, 12c, 12d constitute the training and testing data. Several models in form of several machine learning algorithms with different sets of input data for each intersection 5b, 5c, 5d will be trained with the training data 8b, 8c, 8d and will be addressed in a testing phase according to the intersection category of e.g. 3-way intersection or a 4-way intersection being tested.

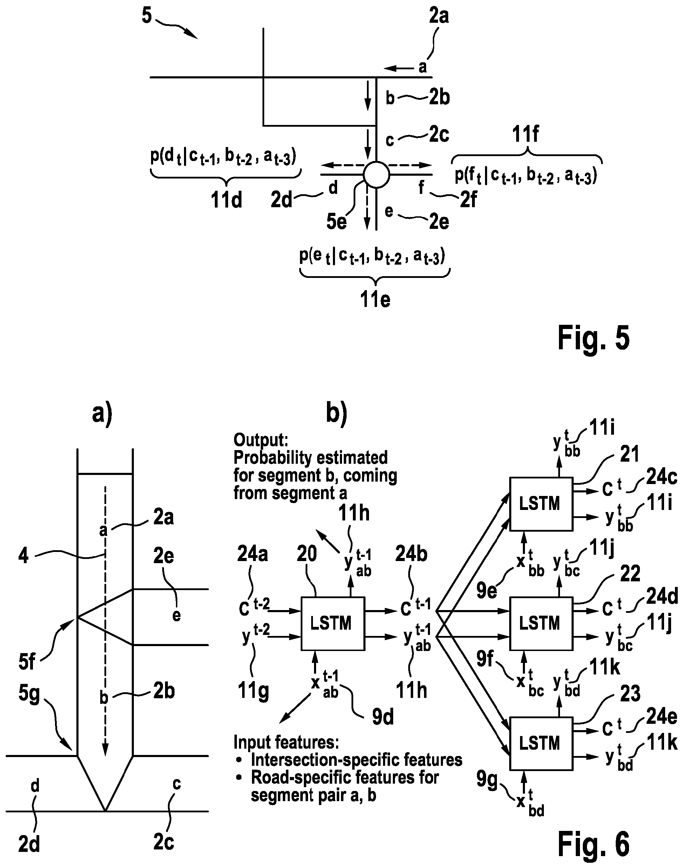

In Fig. 5 a schematic diagram of the most probable path of the vehicle 1 ending at an intersection 5e is shown such that output data of the machine learning algorithm comprising a probability 11d, 11e, 11f for a turn at the intersection 5e of the vehicle 1 for each road segment 2c, 2d, 2e, 2f joining at the intersection 5e is generated. For including temporary information as data attributes of the machine learning algorithm for the 4-way intersection 5e, the feature vector x of the input data comprises the data attributes as shown in formula (1), except that the set of data attributes of the input data is now increased such that the data attributes are provided for each previous intersection vehicle 1 has passed before approaching intersection 5e.

Therefore, road segment 2a and road segment 2b resulting from turns of vehicle 1 on previous intersections are comprised as input data for determining the probabilities 11d, 11e, 11f for a turn at the intersection 5e of the vehicle 1 for each road segment 2c, 2d, 2e, 2f joining at the intersection 5e. For example, probability 11e comprises as input data the vehicle 1 moving currently on road segment 2e when moving before passing intersection 5e on road segment 2c and moving on road segment 2b before turning on road segment 2c and moving on road segment 2a before turning on road segment 2b. A general form of the input data is given by the feature vector of formula (4).

$$\mathrm{x} = \left( x^i_{\mathrm{a}}, x^i_{\mathrm{b}}, x^i_{\mathrm{c}}, x^i_{\mathrm{d}}, x^i_{\mathrm{intersection}} \mid \forall i < n \right). \qquad (4),$$

where i is an intersection and n a number of intersections of a path.

For leveraging information to make temporary consistent determinations of the most probable path Fig. 5 shows where a time series determination/prediction is made, in which the determination/prediction which turn to make/take makes use of the information of the past driven path and the turns vehicle 1 has made within the last three intersections.

Fig. 6 a shows a schematic diagram of road segments 2a to 2e joining two intersections 5f, 5g and the most probable path 4 on part of the road segments 2a, 2b. Instead of extending the set of data attributes inputted into the machine running algorithm to include information from previous intersection turns on the same path 4 as shown in formula (4), time series machine learning algorithms can be used which are specially developed to make predictions based on historical data. One algorithm particularly suitable is an artificial recurrent neural network which tracks an internal state to represent memory such as a long-short-term-memory, LSTM. LSTMs take data attributes as input data of a fixed dimension at time step t, which is a processing step at point in time t, then use the output data determined from time step t-1 as well as their internal cell state data from time step t-1 to generate output data determined from time step t and adapt their internal cell state at time step t for the next determination/prediction step.

When using the data attributes of the feature vector x shown in formula (1), the dimension of the data attributes is dependent on the number road segments 2b, 2c, 2d at the intersection 5g. Instead of training different LSTMs for different intersection categories, in a further embodiment of the invention probabilities 11g, 11h, 11i, 11k between pairs of road segments 2a, 2b; 2b, 2c; 2b, 2d are generated. Each pair of road segments consists of the incoming road segment whereon the vehicle 1 is approaching the intersection 5f, 5g and one other road segment at the intersection 5f, 5g. For each pair of road segments 2a, 2b; 2b, 2b; 2b, 2c; 2b, 2d the LSTM unit 20, 21, 22, 23 generates a probability 11h to 11k which may be normalized across all possible transitions from the incoming road segment 2a, 2b at the intersection 5f, 5g.

Fig. 6b visualizes this in a schematic flow of input data 9d, 9e, 9f, 9g in and output data out of the long-short-term-memory-cell units 20 to 23, wherein probabilities 11h, 11i, 11j, 11k for a turn at the intersection 5f, 5g of vehicle 1 between pairs of road segments 2a, 2b; 2b, 2b; 2b, 2c; 2b, 2d joining at the intersection 5f, 5g are generated. The probability 11h for example represents output data in form of probability estimated for road segment 2b when the vehicle 1 comes from road segment 2a. Data attributes of input data 9d comprise at least one intersection-specific data attribute and road-specific data attributes for road segment pair 2a, 2b of intersection 5f. The data attribute $x^t$ represents a data attribute inputted at time point t. Data attribute $y^t$ represents a probability outputted at time point t. Data attribute $C^t$ represents a cell state at point in time t. For example data attribute 24a represents the cell state at time point t-2 for LSTM cell unit 20. Data attributes 24c, 24d, 24e represent the cell state for LSTM cell units 21, 22, 23, respectively at time point t.

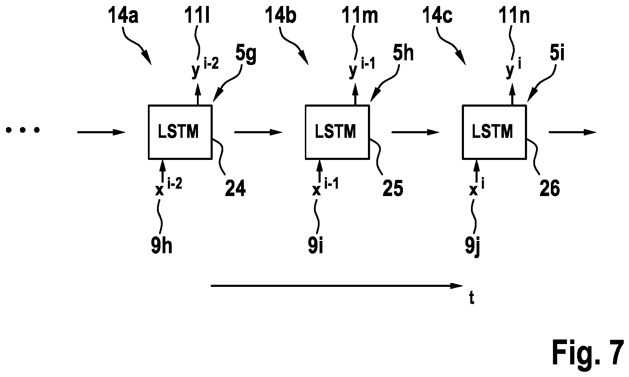

Fig. 7 shows a schematic workflow diagram including functional units 24, 25, 26 of the long-short-term-memory-cells of a time series of an artificial recurrent neural network. At intersection 5g, the LSTM functional unit 24 receives input data 9h and outputs probability 11l which is used as input data 9e at intersection 5h resulting in probability 11m of LSTM cell functional unit 25, wherein the probability 11m is inputted into LSTM cell functional unit 26 as input data 9j to result in probability 11n for a turn at the intersection 5i of the vehicle 1 for each road segment joining at the intersection 5i.

In Fig. 7, for each intersection 5g, 5h, 5i, a machine learning algorithm 14a, 14b, 14c is used such that the machine learning algorithm is in the form of a neural network with memory such as the LSTM. The LSTM cell functional unit 24, 25, 26 takes as input data data attributes of intersection i in form of feature vector $x^i$, and generates probabilities 11l, 11m, 11n for each outgoing road segment at intersection i represented by probability $y^i$, wherein each LSTM cell functional unit 24, 25, 26 takes into account information experienced during previous intersections j<i, where j is i-1, i-2 etc..

## Claims

1. Computer implemented method for determining a most probable path (4) of a vehicle (1) for a driver assistance function of the vehicle (1), which driver assistance function requires information of a road ahead of the vehicle (1), the method comprising the steps:

   - receiving map attribute data (5) from of a map unit comprising information of at least one map having at least one map attribute, and fleet sensor data (6), wherein a fleet represents a number of fleet vehicles (10), wherein each fleet vehicle comprises at least one sensor for acquiring position data and/or motion data which for each fleet vehicle (10) are/is transferred to and stored in a fleet sensor data unit,
   - training a machine learning algorithm (14a - 14c) by inputting training data (8b, 8c, 8d) comprising at least part of both the map attribute data (5) and the fleet sensor data (6), wherein the training data (8b - 8d) is related to an intersection category, the intersection category depending on a predetermined number of road segments (2, 2a - 2f) joining at an intersection (5a - 5i), such as 3-way, 4-way or 5-way intersections,
   - providing to the machine learning algorithm (14a - 14c) input data (9b - 9j) comprising at least one data attribute (15a - 15g, 16a - 16g, 17a - 17g, 18a - 18c) of a road segment (2, 2a - 2f) joining at the intersection (5a - 5i) of the intersection category from which road segment (2, 2a - 2f) the vehicle (1) is approaching the intersection (5a - 5i),
   - generating in response to receiving the input data (9b - 9j) output data of the machine learning algorithm (14a - 14c) comprising a probability (11d - 11n) for a turn at the intersection (5a - 5i) of the vehicle (1) for each road segment (2, 2a - 2f) joining at the intersection (5a - 5i), and
   - determining, based on the probability (11d - 11n) for a turn at the intersection (5a - 5i) of the vehicle (1) for each road segment (2, 2a - 2f) joining at the intersection (5a - 5i), a most probable turn (12b - 12d) at the intersection (5a - 5i) of the vehicle (1), and, based on the most probable turn (12b - 12d) of the intersection (5a - 5i) of the vehicle (1), the most probable path (4) of the vehicle,

   wherein for each of several intersection categories differing in the predetermined number of road segments (2, 2a - 2f) joining at the intersection (5a - 5i) another machine learning algorithm (14a - 14c) is trained, such that for a given number of road segments joining at the intersection there is a defined machine learning algorithm available, and for each intersection (5a - 5i) of a given category within a predetermined length of the most probable path (4) or a predetermined time interval the vehicle (1) is moving in, based on the machine learning algorithm (14a - 14c) trained for the given intersection category, the most probable turn (12b - 12d) at the intersection (5a - 5i) of the vehicle (1) is determined.

2. Computer implemented method of claim 1, wherein, based on the most probable turn (12b - 12d) of the intersection (5a - 5i) of the vehicle (1) at each intersection (5a - 5i) of several intersections (5a - 5i) within the predetermined length of the most probable path (4) or the predetermined time interval the vehicle (1) is moving in, the most probable path (4) of the vehicle (1) is determined by consecutively following each road segment (2, 2a - 2f) on which the vehicle (1) is most probable to turn.

3. Computer implemented method of any of the preceding claims, wherein vehicle- and/or driver-specific data are excluded from the training data (8b - 8d) and/or the input data (9b - 9j) such that a privacy of a driver's data is present while due to usage of the fleet sensor data (6) the most probable path (4) is still accurately determined.

4. Computer implemented method of any of the preceding claims, wherein the training data (8b - 8d) and/or the input data (9b - 9j) includes at least one of the following data attributes (15a - 15g, 16a - 16g, 17a - 17g, 18a - 18c) and/or any combination of at least two of the following data attributes (15a - 15g, 16a - 16g, 17a - 17g, 18a - 18c):

> - road-specific data attributes:

>> - curvature,
>> - slope,
>> - Functional Road Class,
>> - direction change angle, which is an angle between two intersecting road segments
>> - street type,
>> - speed limit,
>> - number of lanes,
>> - width of street,
>> - category of traffic sign,
>> - point of interest,
>> - total number of traversals within a month,
>> - total number of traversals for each hour in a week,

> - intersection-specific data attributes:

>> - total number of road segments
>> - direction angle with the road segment on which the vehicle is approaching the intersection and each of the other road segments of the intersection
>> - direction angle with the road segment on which the vehicle is approaching the intersection and the road segments on which the vehicle is turning
>> - location of the intersection, e.g. GPS coordinates
>> - city and/or province and/or country,
>> - Geohash,
>> - specification of the road segment on which the vehicle is driving,
>> - urban or countryside,
>> - total number of vehicles that drive from one direction into the other in a predefined time interval
>> - total number of traversals within a month,
>> - total number of traversals for each hour in a week,

> - environmental data attributes:

>> - time,
>> - day of a week,
>> - month,
>> - temperature,
>> - weather condition such as rain intensity, sun intensity, snow intensity, fog intensity, position of the sun, wind condition
>> - traffic intensity.

5. Computer implemented method of claim 4, wherein, a number N of data attributes (15a - 159, 16a - - 16g, 17a - 17g, 18a - 18c) for each intersection category is determined by three road segment dependent data attributes for each road segment (2, 2a - 2f) and one road segment independent data attribute according to the following formula:

$$N = n \times 3 + 1,$$

where n is a number of road segments (2, 2a - 2f) joining at the intersection (5a - 5i).

6. Computer implemented method of any of the preceding claims, wherein during the step of training and/or an additional step of testing of the machine learning algorithm (14a - 14c) the road segment dependent data attributes (15a - 15g, 16a 16g, 17a - 17g) are inputted and/or outputted in a sequence clockwise or counter-clockwise when the intersection (5a - 5i) is viewed from above the intersection (5a - 5i) starting from the road segment (2, 2a - 2f) on which the vehicle (1) is approaching the intersection (5a - 5i).

7. Computer implemented method of any of the preceding claims, wherein the input data (9b - 9j) provided to the machine learning algorithm (14a - 14c) comprises not only the at least one data attribute (15a - 15g, 16a - 16g, 17a - 17g, 18a - 18c) of the road segment (2b) joining at the intersection (5g) of the intersection category from which road segment (2b) the vehicle (1) is approaching the intersection (5g), but additionally at least one further data attribute (15a - 15g, 16a - 16g, 17a - 17g, 18a - 18c) of a road segment (2a) joining at a previous intersection (5f) on which road segment (2b) the vehicle has turned before approaching the intersection (5g).

8. Computer implemented method of any of claims 1 to 7, wherein as the machine learning algorithm (14a - 14c) a time series machine learning algorithm is used to determine the most probable path (4) of the vehicle (1) wherein the input data (9b - 9j) is provided to the time series machine learning algorithm (14a - 14c) in a sequential manner.

9. Computer implemented method of claim 8, wherein an artificial recurrent Neural Network is used as the time series machine learning algorithm (14a - 14c), which is trained by using a Long-Short-Tem-Memory such that probabilities (11d - 11n) for a turn at the intersection (5e; 5g) of the vehicle (1) between pairs of road segments (2, 2a - 2f) joining at the intersection (5a - 5i) are generated, wherein each pair consists of the road segment (2c; 2b) on which the vehicle (1) is approaching the intersection (5e; 5g) and each other road segment (2d - 2f; 2d, 2c) joining the intersection (5e; 5g).

10. Computer implemented method of any of the preceding claims, wherein, when a most probable turn (12b - 12d) of the intersection (5a - 5i) of the vehicle (1) at each intersection (5a - 5i) of several intersections (5a - 5i) is to be determined, a Beam Search algorithm is used to determine the most probable path (12b - 12d) of the vehicle (1), wherein the Beam Search algorithm exclusively considers most likely paths (12b - 12d) during expansion of the most probable path (4).

11. A software program realizing the computer implemented method according to any of the preceding claims when executed on a computer, wherein the computer is preferably a distributed computing system part of which being located in a cloud computing system.

12. System for determining a most probable path (4) of a vehicle (1) for a driver assistance function of the vehicle (1), which driver assistance function requires information of a road ahead of the vehicle (1), wherein the system comprises:

- reception means (7) for receiving map attribute data (5) from of a map unit comprising information of at least one map having at least one map attribute, and fleet sensor data (6), wherein a fleet represents a number of fleet vehicles (10), wherein each fleet vehicle comprises at least one sensor for acquiring position data and/or motion data which for each fleet vehicle (10) are/is transferred to and stored in a fleet sensor data unit,
- training means (8) for training a machine learning algorithm (14a - 14c) by inputting training data (8b, 8c, 8d) comprising at least part of both the map attribute data (5) and the fleet sensor data (6), wherein the training data (8b - 8d) is related to an intersection category, the intersection category depending on a predetermined number of road segments (2, 2a - 2f) joining at an intersection (5a - 5i), such as 3-way, 4-way or 5-way intersections, wherein for each of several intersection categories differing in the predetermined number of road segments (2, 2a - 2f) joining at the intersection (5a - 5i) another machine learning algorithm (14a - 14c) is trained, such that for a given number of road segments joining at the intersection there is a defined machine learning algorithm available, and for each intersection (5a - 5i) of a given category within a predetermined length of the most probable path (4) or a predetermined time interval the vehicle (1) is moving in, based on the machine learning algorithm (14a - 14c) trained for the given intersection category, the most probable turn (12b - 12d) at the intersection (5a - 5i) of the vehicle (1) is determined,
- provision means (9) for providing to the machine learning algorithm (14a - 14c) input data (9b - 9j) comprising at least one data attribute (15a - 15g, 16a - 16g, 17a - 17g, 18a - 18c) of a road segment (2, 2a - 2f) joining at the intersection (5a - 5i) of the intersection category from which road segment (2, 2a - 2f) the vehicle (1) is approaching

13

the intersection (5a - 5i),

- generation means (11) for generating in response to receiving the input data (9b - 9j) output data of the machine learning algorithm (14a - 14c) comprising a probability (11d - 11n) for a turn at the intersection (5a - 5i) of the vehicle (1) for each road segment (2, 2a - 2f) joining at the intersection (5a - 5i), and

- determination means (12) for determining, based on the probability (11d - 11n) for a turn at the intersection (5a - 5i) of the vehicle (1) for each road segment (2, 2a - 2f) joining at the intersection (5a - 5i), a most probable turn (12b - 12d) at the intersection (5a - 5i) of the vehicle (1), and, based on the most probable turn (12b - 12d) of the intersection (5a - 5i) of the vehicle (1), the most probable path (4) of the vehicle.

13. System of claim 12, wherein the machine learning algorithm (14a - 14c) is one of a Random Forest, an artificial Neural Network, a Support Vector Machine, a k-Nearest-Neighbours-algorithm, and an Ensemble Classifier.

14. System of claim 13, wherein the machine learning algorithm (14a - 14c) is a time series machine learning algorithm in form of an artificial recurrent Neural Network, which tracks an internal state to represent memory, such as Long-Short-Term-Memory.

**Patentansprüche**

1. Computerimplementiertes Verfahren zur Bestimmung eines wahrscheinlichsten Pfades (4) eines Fahrzeugs (1) für eine Fahrerassistenzfunktion des Fahrzeugs (1), welche Fahrerassistenzfunktion Informationen einer Straße vor dem Fahrzeug (1) erfordert, wobei das Verfahren die folgenden Schritte umfasst:

• Empfangen von Kartenattributdaten (5) von einer Karteneinheit, welche Informationen mindestens einer Karte mit mindestens einem Kartenattribut umfasst, und Flottensensordaten (6), wobei eine Flotte eine Anzahl von Flottenfahrzeugen (10) repräsentiert, wobei jedes Flottenfahrzeug mindestens einen Sensor zum Erfassen von Positionsdaten und/oder Bewegungsdaten umfasst, welche für jedes Flottenfahrzeug (10) übertragen werden und in einer Flottensensordateneinheit gespeichert werden,

• Trainieren eines maschinellen Lernalgorithmus (14a - 14c) durch Eingeben von Trainingsdaten (8b, 8c, 8d), welche mindestens einen Teil sowohl der Kartenattributdaten (5) als auch der Flottensensordaten (6) umfassen, wobei die Trainingsdaten (8b - 8d) mit einer Kreuzungskategorie in Beziehung stehen, wobei die Kreuzungskategorie von einer vorbestimmten Anzahl von Straßenabschnitten (2, 2a - 2f) abhängt, die an einer Kreuzung (5a - 5i) zusammentreffen, wie zum Beispiel 3-Wege-, 4-Wege- oder 5-Wege-Kreuzungen,

• Bereitstellen von Eingabedaten (9b - 9j) an den maschinellen Lernalgorithmus (14a - 14c), welche mindestens ein Datenattribut (15a - 15g, 16a - 16g, 17a - 17g, 18a - 18c) eines Straßenabschnitts (2, 2a - 2f) umfassen, der an der Kreuzung (5a - 5i) der Kreuzungskategorie zusammentrifft, von welchem Straßenabschnitt (2, 2a - 2f) das Fahrzeug (1) sich der Kreuzung (5a - 5i) nähert,

• Erzeugen von Ausgabedaten des maschinellen Lernalgorithmus (14a - 14c) als Reaktion auf das Empfangen der Eingabedaten (9b - 9j), welche eine Wahrscheinlichkeit (11d - 11n) für ein Abbiegen an der Kreuzung (5a - 5i) des Fahrzeugs (1) für jeden Straßenabschnitt (2, 2a - 2f) umfassen, der an der Kreuzung (5a - 5i) zusammentrifft, und

• Bestimmen eines wahrscheinlichsten Abbiegens (12b - 12d) an der Kreuzung (5a - 5i) des Fahrzeugs (1) basierend auf der Wahrscheinlichkeit (11d - 11n) für ein Abbiegen an der Kreuzung (5a - 5i) des Fahrzeugs (1) für jeden Straßenabschnitt (2, 2a - 2f), der an der Kreuzung (5a - 5i) zusammentrifft, und, basierend auf dem wahrscheinlichsten Abbiegen (12b - 12d) an der Kreuzung (5a - 5i) des Fahrzeugs (1), des wahrscheinlichsten Pfades (4) des Fahrzeugs,

wobei für jede von mehreren Kreuzungskategorien, die sich in der vorbestimmten Anzahl von Straßenabschnitten (2, 2a - 2f) unterscheiden, die an der Kreuzung (5a - 5i) zusammentreffen, ein anderer maschineller Lernalgorithmus (14a - 14c) trainiert wird, so dass für eine gegebene Anzahl von Straßenabschnitten, die an der Kreuzung zusammentreffen, ein definierter maschineller Lernalgorithmus verfügbar ist,

und für jede Kreuzung (5a - 5i) einer gegebenen Kategorie innerhalb einer vorbestimmten Länge des wahrscheinlichsten Pfades (4) oder eines vorbestimmten Zeitintervalls, in welchem sich das Fahrzeug (1) bewegt, das wahrscheinlichste Abbiegen (12b - 12d) an der Kreuzung (5a - 5i) des Fahrzeugs (1) basierend auf dem maschinellen Lernalgorithmus (14a - 14c) bestimmt wird, der für die gegebene Kreuzungskategorie trainiert wurde.

2. Computerimplementiertes Verfahren nach Anspruch 1, wobei, basierend auf dem wahrscheinlichsten Abbiegen (12b - 12d) an der Kreuzung (5a - 5i) des Fahrzeugs (1) an jeder Kreuzung (5a - 5i) von mehreren Kreuzungen (5a - 5i) innerhalb der vorbestimmten Länge des wahrscheinlichsten Pfades (4) oder des vorbestimmten Zeitintervalls, in welchem sich das Fahrzeug (1) bewegt, der wahrscheinlichste Pfad (4) des Fahrzeugs (1) durch aufeinanderfolgendes Folgen jedes Straßenabschnitts (2, 2a - 2f) bestimmt wird, auf welchen das Fahrzeug (1) höchstwahrscheinlich abbiegt.

3. Computerimplementiertes Verfahren nach einem der vorhergehenden Ansprüche, wobei fahrzeug- und/oder fahrerspezifische Daten von den Trainingsdaten (8b - 8d) und/oder den Eingabedaten (9b - 9j) ausgeschlossen werden, so dass eine Privatsphäre der Daten eines Fahrers vorhanden ist, während aufgrund der Verwendung der Flottensensordaten (6) der wahrscheinlichste Pfad (4) dennoch genau bestimmt wird.

4. Computerimplementiertes Verfahren nach einem der vorhergehenden Ansprüche, wobei die Trainingsdaten (8b - 8d) und/oder die Eingabedaten (9b - 9j) mindestens eines der folgenden Datenattribute (15a - 15g, 16a - 16g, 17a - 17g, 18a - 18c) und/oder eine beliebige Kombination von mindestens zwei der folgenden Datenattribute (15a - 15g, 16a - 16g, 17a - 17g, 18a - 18c) umfassen:

- straßenspezifische Datenattribute:
- Krümmung,
- Steigung,
- Funktionale Straßenklasse,
- Richtungsänderungswinkel, welcher ein Winkel zwischen zwei sich kreuzenden Straßenabschnitten ist
- Straßentyp,
- Geschwindigkeitsbegrenzung,
- Anzahl der Fahrspuren,
- Straßenbreite,
- Kategorie des Verkehrszeichens,
- Point of Interest,
- Gesamtanzahl der Durchfahrten innerhalb eines Monats,
- Gesamtanzahl der Durchfahrten für jede Stunde in einer Woche,
- kreuzungsspezifische Datenattribute:
- Gesamtanzahl der Straßenabschnitte
- Richtungswinkel mit dem Straßenabschnitt, auf welchem das Fahrzeug sich der Kreuzung nähert, und jedem der anderen Straßenabschnitte der Kreuzung
- Richtungswinkel mit dem Straßenabschnitt, auf welchem das Fahrzeug sich der Kreuzung nähert, und den Straßenabschnitten, auf welche das Fahrzeug abbiegt
- Ort der Kreuzung, z. B. GPS-Koordinaten
- Stadt und/oder Provinz und/oder Land,
- Geohash,
- Spezifikation des Straßenabschnitts, auf welchem das Fahrzeug fährt,
- städtisch oder ländlich,
- Gesamtanzahl der Fahrzeuge, die von einer Richtung in die andere in einem vordefinierten Zeitintervall fahren
- Gesamtanzahl der Durchfahrten innerhalb eines Monats,
- Gesamtanzahl der Durchfahrten für jede Stunde in einer Woche,
- umgebungsbezogene Datenattribute:
- Zeit,
- Wochentag,
- Monat,
- Temperatur,
- Wetterbedingung wie Regenintensität, Sonnenintensität, Schneeintensität, Nebelintensität, Position der Sonne, Windbedingung
- Verkehrsintensität.

5. Computerimplementiertes Verfahren nach Anspruch 4, wobei eine Anzahl N von Datenattributen (15a - 15g, 16a - 16g, 17a - 17g, 18a - 18c) für jede Kreuzungskategorie durch drei straßenabschnittsabhängige Datenattribute für jeden Straßenabschnitt (2, 2a - 2f) und ein straßenabschnittsunabhängiges Datenattribut gemäß der folgenden Formel bestimmt wird:

$$N = n \times 3 + 1,$$

wobei n eine Anzahl von Straßenabschnitten (2, 2a - 2f) ist, die an der Kreuzung (5a - 5i) zusammentreffen.

6. Computerimplementiertes Verfahren nach einem der vorhergehenden Ansprüche, wobei während des Schritts des Trainierens und/oder eines zusätzlichen Schritts des Testens des maschinellen Lernalgorithmus (14a - 14c) die straßenabschnittsabhängigen Datenattribute (15a - 15g, 16a - 16g, 17a - 17g) in einer Reihenfolge im Uhrzeigersinn oder gegen den Uhrzeigersinn eingegeben und/oder ausgegeben werden, wenn die Kreuzung (5a - 5i) von oberhalb der Kreuzung (5a - 5i) betrachtet wird, beginnend mit dem Straßenabschnitt (2, 2a - 2f), auf welchem das Fahrzeug (1) sich der Kreuzung (5a - 5i) nähert.

7. Computerimplementiertes Verfahren nach einem der vorhergehenden Ansprüche, wobei die dem maschinellen Lernalgorithmus (14a - 14c) bereitgestellten Eingabedaten (9b - 9j) nicht nur das mindestens eine Datenattribut (15a - 15g, 16a - 16g, 17a - 17g, 18a - 18c) des Straßenabschnitts (2b) umfassen, der an der Kreuzung (5g) der Kreuzungskategorie zusammentrifft, von welchem Straßenabschnitt (2b) das Fahrzeug (1) sich der Kreuzung (5g) nähert, sondern zusätzlich mindestens ein weiteres Datenattribut (15a - 15g, 16a - 16g, 17a - 17g, 18a - 18c) eines Straßenabschnitts (2a), der an einer vorhergehenden Kreuzung (5f) zusammentrifft, auf welchen Straßenabschnitt (2b) das Fahrzeug abgebogen ist, bevor es sich der Kreuzung (5g) nähert.

8. Computerimplementiertes Verfahren nach einem der Ansprüche 1 bis 7, wobei als der maschinelle Lernalgorithmus (14a - 14c) ein Zeitreihen-maschineller-Lernalgorithmus verwendet wird, um den wahrscheinlichsten Pfad (4) des Fahrzeugs (1) zu bestimmen, wobei die Eingabedaten (9b - 9j) dem Zeitreihen-maschinellen-Lernalgorithmus (14a - 14c) in sequentieller Weise bereitgestellt werden.

9. Computerimplementiertes Verfahren nach Anspruch 8, wobei ein künstliches rekurrentes neuronales Netzwerk als der Zeitreihen-maschinelle-Lernalgorithmus (14a - 14c) verwendet wird, welches durch Verwendung eines Long-Short-Term-Memory trainiert wird, so dass Wahrscheinlichkeiten (11d - 11n) für ein Abbiegen an der Kreuzung (5e; 5g) des Fahrzeugs (1) zwischen Paaren von Straßenabschnitten (2, 2a - 2f) erzeugt werden, die an der Kreuzung (5a - 5i) zusammentreffen, wobei jedes Paar aus dem Straßenabschnitt (2c; 2b) besteht, auf welchem das Fahrzeug (1) sich der Kreuzung (5e; 5g) nähert, und jedem anderen Straßenabschnitt (2d - 2f; 2d, 2c), der die Kreuzung (5e; 5g) verbindet.

10. Computerimplementiertes Verfahren nach einem der vorhergehenden Ansprüche, wobei, wenn ein wahrscheinlichstes Abbiegen (12b - 12d) an der Kreuzung (5a - 5i) des Fahrzeugs (1) an jeder Kreuzung (5a - 5i) von mehreren Kreuzungen (5a - 5i) zu bestimmen ist, ein Beam-Search-Algorithmus verwendet wird, um den wahrscheinlichsten Pfad (12b - 12d) des Fahrzeugs (1) zu bestimmen, wobei der Beam-Search-Algorithmus ausschließlich die wahrscheinlichsten Pfade (12b - 12d) während der Erweiterung des wahrscheinlichsten Pfades (4) berücksichtigt.

11. Ein Softwareprogramm, welches das computerimplementierte Verfahren nach einem der vorhergehenden Ansprüche verwirklicht, wenn es auf einem Computer ausgeführt wird, wobei der Computer vorzugsweise ein verteiltes Computersystem ist, von welchem ein Teil sich in einem Cloud-Computing-System befindet.

12. System zur Bestimmung eines wahrscheinlichsten Pfades (4) eines Fahrzeugs (1) für eine Fahrerassistenzfunktion des Fahrzeugs (1), welche Fahrerassistenzfunktion Informationen einer Straße vor dem Fahrzeug (1) erfordert, wobei das System umfasst:

• Empfangsmittel (7) zum Empfangen von Kartenattributdaten (5) von einer Karteneinheit, welche Informationen mindestens einer Karte mit mindestens einem Kartenattribut umfasst, und Flottensensordaten (6), wobei eine Flotte eine Anzahl von Flottenfahrzeugen (10) repräsentiert, wobei jedes Flottenfahrzeug mindestens einen Sensor zum Erfassen von Positionsdaten und/oder Bewegungsdaten umfasst, welche für jedes Flottenfahrzeug (10) übertragen werden und in einer Flottensensordateneinheit gespeichert werden,

**gekennzeichnet durch**

• Trainingsmittel (8) zum Trainieren eines maschinellen Lernalgorithmus (14a - 14c) durch Eingeben von Trainingsdaten (8b, 8c, 8d), welche mindestens einen Teil sowohl der Kartenattributdaten (5) als auch der Flottensensordaten (6) umfassen, wobei die Trainingsdaten (8b - 8d) mit einer Kreuzungskategorie in Beziehung stehen, wobei die Kreuzungskategorie von einer vorbestimmten Anzahl von Straßenabschnitten (2, 2a - 2f) abhängt, die an einer Kreuzung (5a - 5i) zusammentreffen, wie zum Beispiel 3-Wege-, 4-Wege- oder 5-Wege-Kreuzungen, wobei für jede von mehreren Kreuzungskategorien, die sich in der vorbestimmten Anzahl von Straßenabschnitten (2, 2a - 2f) unterscheiden, die an der Kreuzung (5a - 5i) zusammentreffen, ein anderer maschineller Lernalgorithmus (14a - 14c) trainiert wird, so dass für eine gegebene Anzahl von Straßenabschnitten, die an der Kreuzung zusammentreffen, ein definierter maschineller Lernalgorithmus verfügbar ist, und für jede Kreuzung (5a - 5i) einer gegebenen Kategorie innerhalb einer vorbestimmten Länge des wahrscheinlichsten Pfades (4) oder eines vorbestimmten Zeitintervalls, in welchem sich das Fahrzeug (1) bewegt, das wahrscheinlichste Abbiegen (12b - 12d) an der Kreuzung (5a - 5i) des Fahrzeugs (1) basierend auf dem maschinellen Lernalgorithmus (14a - 14c) bestimmt wird, der für die gegebene Kreuzungskategorie trainiert wurde,
• Bereitstellungsmittel (9) zum Bereitstellen von Eingabedaten (9b - 9j) an den maschinellen Lernalgorithmus (14a - 14c), welche mindestens ein Datenattribut (15a - 15g, 16a - 16g, 17a - 17g, 18a - 18c) eines Straßenabschnitts (2, 2a - 2f) umfassen, der an der Kreuzung (5a - 5i) der Kreuzungskategorie zusammentrifft, von welchem Straßenabschnitt (2, 2a - 2f) das Fahrzeug (1) sich der Kreuzung (5a - 5i) nähert,
• Erzeugungsmittel (11) zum Erzeugen von Ausgabedaten des maschinellen Lernalgorithmus (14a - 14c) als Reaktion auf das Empfangen der Eingabedaten (9b - 9j), welche eine Wahrscheinlichkeit (11d - 11n) für ein Abbiegen an der Kreuzung (5a - 5i) des Fahrzeugs (1) für jeden Straßenabschnitt (2, 2a - 2f) umfassen, der an der Kreuzung (5a - 5i) zusammentrifft, und
• Bestimmungsmittel (12) zum Bestimmen eines wahrscheinlichsten Abbiegens (12b - 12d) an der Kreuzung (5a - 5i) des Fahrzeugs (1) basierend auf der Wahrscheinlichkeit (11d - 11n) für ein Abbiegen an der Kreuzung (5a - 5i) des Fahrzeugs (1) für jeden Straßenabschnitt (2, 2a - 2f), der an der Kreuzung (5a - 5i) zusammentrifft, und, basierend auf dem wahrscheinlichsten Abbiegen (12b - 12d) an der Kreuzung (5a - 5i) des Fahrzeugs (1), des wahrscheinlichsten Pfades (4) des Fahrzeugs.

13. System nach Anspruch 12, wobei der maschinelle Lernalgorithmus (14a - 14c) einer von einem Random Forest, einem künstlichen neuronalen Netzwerk, einer Support-Vektor-Maschine, einem k-Nearest-Neighbours-Algorithmus und einem Ensemble-Klassifikator ist.

14. System nach Anspruch 13, wobei der maschinelle Lernalgorithmus (14a - 14c) ein Zeitreihen-maschineller-Lernalgorithmus in Form eines künstlichen rekurrenten neuronalen Netzwerks ist, welches einen internen Zustand verfolgt, um ein Gedächtnis zu repräsentieren, wie zum Beispiel Long-Short-Term-Memory.

## Revendications

1. Procédé mis en œuvre par ordinateur pour déterminer un chemin le plus probable (4) d'un véhicule (1) pour une fonction d'assistance au conducteur du véhicule (1), laquelle fonction d'assistance au conducteur nécessite des informations d'une route en avant du véhicule (1), le procédé comprenant les étapes :

• recevoir des données d'attribut de carte (5) d'une unité de carte comprenant des informations d'au moins une carte ayant au moins un attribut de carte, et des données de capteur de flotte (6), où une flotte représente un nombre de véhicules de flotte (10), où chaque véhicule de flotte comprend au moins un capteur pour acquérir des données de position et/ou des données de mouvement qui pour chaque véhicule de flotte (10) sont transférées à et stockées dans une unité de données de capteur de flotte,
• entraîner un algorithme d'apprentissage automatique (14a - 14c) en entrant des données d'entraînement (8b, 8c, 8d) comprenant au moins une partie des données d'attribut de carte (5) et des données de capteur de flotte (6), où les données d'entraînement (8b - 8d) sont liées à une catégorie d'intersection, la catégorie d'intersection dépendant d'un nombre prédéterminé de segments de route (2, 2a - 2f) se rejoignant à une intersection (5a - 5i), tels que des intersections à 3 voies, à 4 voies ou à 5 voies,
• fournir à l'algorithme d'apprentissage automatique (14a - 14c) des données d'entrée (9b - 9j) comprenant au moins un attribut de données (15a - 15g, 16a - 16g, 17a - 17g, 18a - 18c) d'un segment de route (2, 2a - 2f) se rejoignant à l'intersection (5a - 5i) de la catégorie d'intersection depuis lequel segment de route (2, 2a - 2f) le véhicule (1) approche l'intersection (5a - 5i),
• générer en réponse à la réception des données d'entrée (9b - 9j) des données de sortie de l'algorithme d'apprentissage automatique (14a - 14c) comprenant une probabilité (11d - 11n) pour un virage à l'intersection (5a - 5i) du véhicule (1) pour chaque segment de route (2, 2a - 2f) se rejoignant à l'intersection (5a - 5i), et
• déterminer, sur la base de la probabilité (11d - 11n) pour un virage à l'intersection (5a - 5i) du véhicule (1) pour chaque segment de route (2, 2a - 2f) se rejoignant à l'intersection (5a - 5i), un virage le plus probable (12b - 12d) à l'intersection (5a - 5i) du véhicule (1), et, sur la base du virage le plus probable (12b - 12d) à l'intersection (5a - 5i) du véhicule (1), le chemin le plus probable (4) du véhicule,

où pour chacune de plusieurs catégories d'intersection différant dans le nombre prédéterminé de segments de route (2, 2a - 2f) se rejoignant à l'intersection (5a - 5i) un autre algorithme d'apprentissage automatique (14a - 14c) est entraîné, de sorte que pour un nombre donné de segments de route se rejoignant à l'intersection il y a un algorithme d'apprentissage automatique défini disponible,

et pour chaque intersection (5a - 5i) d'une catégorie donnée dans une longueur prédéterminée du chemin le plus probable (4) ou un intervalle de temps prédéterminé dans lequel le véhicule (1) se déplace, sur la base de l'algorithme d'apprentissage automatique (14a - 14c) entraîné pour la catégorie d'intersection donnée, le virage le plus probable (12b - 12d) à l'intersection (5a - 5i) du véhicule (1) est déterminé.'

2. Procédé mis en œuvre par ordinateur selon la revendication 1, où, sur la base du virage le plus probable (12b - 12d) à l'intersection (5a - 5i) du véhicule (1) à chaque intersection (5a - 5i) de plusieurs intersections (5a - 5i) dans la longueur prédéterminée du chemin le plus probable (4) ou l'intervalle de temps prédéterminé dans lequel le véhicule (1) se déplace, le chemin le plus probable (4) du véhicule (1) est déterminé en suivant consécutivement chaque segment de route (2, 2a - 2f) sur lequel le véhicule (1) est le plus probable de tourner.

3. Procédé mis en œuvre par ordinateur selon l'une quelconque des revendications précédentes, où des données spécifiques au véhicule et/ou au conducteur sont exclues des données d'entraînement (8b - 8d) et/ou des données d'entrée (9b - 9j) de sorte qu'une confidentialité des données d'un conducteur est présente tandis qu'en raison de l'utilisation des données de capteur de flotte (6) le chemin le plus probable (4) est toujours déterminé avec précision.

4. Procédé mis en œuvre par ordinateur selon l'une quelconque des revendications précédentes, où les données d'entraînement (8b - 8d) et/ou les données d'entrée (9b - 9j) incluent au moins l'un des attributs de données suivants (15a - 15g, 16a - 16g, 17a - 17g, 18a - 18c) et/ou toute combinaison d'au moins deux des attributs de données suivants (15a - 15g, 16a - 16g, 17a - 17g, 18a - 18c) :

- attributs de données spécifiques à la route :
- courbure,
- pente,
- Classe de Route Fonctionnelle,
- angle de changement de direction, qui est un angle entre deux segments de route se croisant
- type de rue,
- limitation de vitesse,
- nombre de voies,
- largeur de rue,
- catégorie de panneau de signalisation,
- point d'intérêt,
- nombre total de traversées au cours d'un mois,
- nombre total de traversées pour chaque heure dans une semaine,
- attributs de données spécifiques à l'intersection :
- nombre total de segments de route
- angle de direction avec le segment de route sur lequel le véhicule approche l'intersection et chacun des autres segments de route de l'intersection
- angle de direction avec le segment de route sur lequel le véhicule approche l'intersection et les segments de route sur lesquels le véhicule tourne
- emplacement de l'intersection, par exemple coordonnées GPS
- ville et/ou province et/ou pays,
- Geohash,
- spécification du segment de route sur lequel le véhicule roule,
- urbain ou campagne,
- nombre total de véhicules qui roulent d'une direction à l'autre dans un intervalle de temps prédéfini
- nombre total de traversées au cours d'un mois,
- nombre total de traversées pour chaque heure dans une semaine,
- attributs de données environnementales :
- heure,
- jour de la semaine,
- mois,
- température,
- condition météorologique telle que intensité de pluie, intensité de soleil, intensité de neige, intensité de brouillard, position du soleil, condition de vent
• intensité du trafic.

5. Procédé mis en œuvre par ordinateur selon la revendication 4, où un nombre N d'attributs de données (15a - 15g, 16a - 16g, 17a - 17g, 18a - 18c) pour chaque catégorie d'intersection est déterminé par trois attributs de données dépendant du segment de route pour chaque segment de route (2, 2a - 2f) et un attribut de données indépendant du segment de route selon la formule suivante :

$$N = n \times 3 + 1,$$

où n est un nombre de segments de route (2, 2a - 2f) se rejoignant à l'intersection (5a - 5i).

6. Procédé mis en œuvre par ordinateur selon l'une quelconque des revendications précédentes, où pendant l'étape d'entraînement et/ou une étape supplémentaire de test de l'algorithme d'apprentissage automatique (14a - 14c) les attributs de données dépendant du segment de route (15a - 15g, 16a - 16g, 17a - 17g) sont entrés et/ou sortis dans une séquence dans le sens horaire ou dans le sens antihoraire lorsque l'intersection (5a - 5i) est vue d'au-dessus de l'intersection (5a - 5i) en commençant par le segment de route (2, 2a - 2f) sur lequel le véhicule (1) approche l'intersection (5a - 5i).

7. Procédé mis en œuvre par ordinateur selon l'une quelconque des revendications précédentes, où les données d'entrée (9b - 9j) fournies à l'algorithme d'apprentissage automatique (14a - 14c) comprennent non seulement l'au moins un attribut de données (15a - 15g, 16a - 16g, 17a - 17g, 18a - 18c) du segment de route (2b) se rejoignant à l'intersection (5g) de la catégorie d'intersection depuis lequel segment de route (2b) le véhicule (1) approche l'intersection (5g), mais en outre au moins un attribut de données supplémentaire (15a - 15g, 16a - 16g, 17a - 17g, 18a - 18c) d'un segment de route (2a) se rejoignant à une intersection précédente (5f) sur lequel segment de route (2b) le véhicule a tourné avant d'approcher l'intersection (5g).

8. Procédé mis en œuvre par ordinateur selon l'une quelconque des revendications 1 à 7, où en tant qu'algorithme d'apprentissage automatique (14a - 14c) un algorithme d'apprentissage automatique de séries temporelles est utilisé pour déterminer le chemin le plus probable (4) du véhicule (1) où les données d'entrée (9b - 9j) sont fournies à l'algorithme d'apprentissage automatique de séries temporelles (14a - 14c) de manière séquentielle.

9. Procédé mis en œuvre par ordinateur selon la revendication 8, où un Réseau de Neurones Récurrent artificiel est utilisé en tant qu'algorithme d'apprentissage automatique de séries temporelles (14a - 14c), lequel est entraîné en utilisant une Mémoire à Court et Long Terme de sorte que des probabilités (11d - 11n) pour un virage à l'intersection (5e ; 5g) du véhicule (1) entre des paires de segments de route (2, 2a - 2f) se rejoignant à l'intersection (5a - 5i) sont générées, où chaque paire consiste en le segment de route (2c ; 2b) sur lequel le véhicule (1) approche l'intersection (5e ; 5g) et chaque autre segment de route (2d - 2f ; 2d, 2c) rejoignant l'intersection (5e ; 5g).

10. Procédé mis en œuvre par ordinateur selon l'une quelconque des revendications précédentes, où, lorsqu'un virage le plus probable (12b - 12d) à l'intersection (5a - 5i) du véhicule (1) à chaque intersection (5a - 5i) de plusieurs intersections (5a - 5i) doit être déterminé, un algorithme de Recherche en Faisceau est utilisé pour déterminer le chemin le plus probable (12b - 12d) du véhicule (1), où l'algorithme de Recherche en Faisceau considère exclusivement les chemins les plus probables (12b - 12d) pendant l'expansion du chemin le plus probable (4).

11. Un programme logiciel réalisant le procédé mis en œuvre par ordinateur selon l'une quelconque des revendications précédentes lorsqu'il est exécuté sur un ordinateur, où l'ordinateur est de préférence un système informatique distribué dont une partie est située dans un système informatique en nuage.

12. Système pour déterminer un chemin le plus probable (4) d'un véhicule (1) pour une fonction d'assistance au conducteur du véhicule (1), laquelle fonction d'assistance au conducteur nécessite des informations d'une route en avant du véhicule (1), où le système comprend :

• des moyens de réception (7) pour recevoir des données d'attribut de carte (5) d'une unité de carte comprenant des informations d'au moins une carte ayant au moins un attribut de carte, et des données de capteur de flotte (6), où une flotte représente un nombre de véhicules de flotte (10), où chaque véhicule de flotte comprend au moins un capteur pour acquérir des données de position et/ou des données de mouvement qui pour chaque véhicule de flotte (10) sont transférées à et stockées dans une unité de données de capteur de flotte,

**caractérisé par**

• des moyens d'entraînement (8) pour entraîner un algorithme d'apprentissage automatique (14a - 14c) en entrant des données d'entraînement (8b, 8c, 8d) comprenant au moins une partie des données d'attribut de carte (5) et des données de capteur de flotte (6), où les données d'entraînement (8b - 8d) sont liées à une catégorie d'intersection, la catégorie d'intersection dépendant d'un nombre prédéterminé de segments de route (2, 2a - 2f) se rejoignant à une intersection (5a - 5i), tels que des intersections à 3 voies, à 4 voies ou à 5 voies, où pour chacune de plusieurs catégories d'intersection différant dans le nombre prédéterminé de segments de route (2, 2a - 2f) se rejoignant à l'intersection (5a - 5i) un autre algorithme d'apprentissage automatique (14a - 14c) est entraîné, de sorte que pour un nombre donné de segments de route se rejoignant à l'intersection il y a un algorithme d'apprentissage automatique défini disponible, et pour chaque intersection (5a - 5i) d'une catégorie donnée dans une longueur prédéterminée du chemin le plus probable (4) ou un intervalle de temps prédéterminé dans lequel le véhicule (1) se déplace, le virage le plus probable (12b - 12d) à l'intersection (5a - 5i) du véhicule (1) est déterminé sur la base de l'algorithme d'apprentissage automatique (14a - 14c) entraîné pour la catégorie d'intersection donnée,
• des moyens de fourniture (9) pour fournir à l'algorithme d'apprentissage automatique (14a - 14c) des données d'entrée (9b - 9j) comprenant au moins un attribut de données (15a - 15g, 16a - 16g, 17a - 17g, 18a - 18c) d'un segment de route (2, 2a - 2f) se rejoignant à l'intersection (5a - 5i) de la catégorie d'intersection depuis lequel segment de route (2, 2a - 2f) le véhicule (1) approche l'intersection (5a - 5i),
• des moyens de génération (11) pour générer en réponse à la réception des données d'entrée (9b - 9j) des données de sortie de l'algorithme d'apprentissage automatique (14a - 14c) comprenant une probabilité (11d - 11n) pour un virage à l'intersection (5a - 5i) du véhicule (1) pour chaque segment de route (2, 2a - 2f) se rejoignant à l'intersection (5a - 5i), et
• des moyens de détermination (12) pour déterminer, sur la base de la probabilité (11d - 11n) pour un virage à l'intersection (5a - 5i) du véhicule (1) pour chaque segment de route (2, 2a - 2f) se rejoignant à l'intersection (5a - 5i), un virage le plus probable (12b - 12d) à l'intersection (5a - 5i) du véhicule (1), et, sur la base du virage le plus probable (12b - 12d) à l'intersection (5a - 5i) du véhicule (1), le chemin le plus probable (4) du véhicule.

13. Système selon la revendication 12, où l'algorithme d'apprentissage automatique (14a - 14c) est l'un d'une Forêt Aléatoire, d'un Réseau de Neurones artificiel, d'une Machine à Vecteurs de Support, d'un algorithme des k-Plus-Proches-Voisins, et d'un Classificateur d'Ensemble.

14. Système selon la revendication 13, où l'algorithme d'apprentissage automatique (14a - 14c) est un algorithme d'apprentissage automatique de séries temporelles sous forme d'un Réseau de Neurones Récurrent artificiel, lequel suit un état interne pour représenter une mémoire, tel qu'une Mémoire à Court et Long Terme.

**Fig. 1**

**Fig. 2**

**Fig. 3**

**8b**

16e
16f

Feature set (3x3+1)
-90 grad, 167 traversals, FRC2 — 17a — 15e
-180 grad, 187 traversals, FRC1 — 17b — 15f
9b
-210 grad, 91 traversals, FRC2 — 17c — 15g
-12 grad outside temperature

16g
18a

Ground truth or label — 12b
-2nd way selected

5b

**8d**

Feature set (4x3+1)
-30 grad, 45 traversals, FRC3
-90 grad, 167 traversals, FRC4
9c
-180 grad, 187 traversals, FRC4
-210 grad, 91 traversals, FRC3
-19 grad outside temperature — 18c

Ground truth or label — 12d
-3rd way selected

5d

4

5c

Feature set (4x3+1)
-45 grad, 45 traversals, FRC1 — 17d
-90 grad, 167 traversals, FRC2 — 17e
9c
-180 grad, 187 traversals, FRC1 — 17f
-210 grad, 91 traversals, FRC2 — 17g
-19 grad outside temperature — 18b

Ground truth or label — 12c
-1st way selected

**8c**

Fig. 4

EP 3 871 911 B1

**Fig. 5**

**Fig. 6**

**14a** **11l** **14b** **11m** **14c** **11n**

$y^{i-2}$ **5g** $y^{i-1}$ **5h** $y^i$ **5i**

· · · → → | LSTM | → | LSTM | → | LSTM | →

$x^{i-2}$ **24** $x^{i-1}$ **25** $x^i$ **26**

**9h** **9i** **9j**

→ t

# Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014068094 A1

**Non-patent literature cited in the description**

- Route and Stopping Intent Prediction at Intersections From Car Fleet Data. **GROSS FLORIAN et al.** IEEE TRANSACTIONS ON INTELLIGENT VEHICLES. IEEE, 01 June 2016, vol. 1, 177-186